# DEMANDE DE BREVET EUROPEEN

(11) **EP 1 700 741 A1**
(43) Date de publication de la demande: **13.09.2006**
(21) Numéro de dépôt: 06300205.9
(22) Date de dépôt: 07.03.2006
(51) Int. Cl.: B60Q 1/30, B60Q 1/44, B60Q 1/26

(54) **Dispositif de signalisation ou d'éclairage d'un véhicule et carte de pilotage d'alimentation pour ce dispositif**

(30) Priorité: 09.03.2005 FR 0502355
(71) Demandeur: Peugeot Citroen Automobiles, 78140 Velizy-Villacoublay (FR)
(72) Inventeur: Lefranc, Francis, 92150 Suresnes (FR)
(74) Mandataire: Ménès, Catherine

(57) **Abrégé**

Ce dispositif de signalisation ou d'éclairage d'un véhicule automobile comporte une carte de pilotage de la tension d'alimentation comprenant :
- une première sortie (28) d'alimentation raccordée à une première lampe,
- une seconde sortie (30) d'alimentation raccordée à une seconde lampe,
- une entrée (34) de tension raccordée à la seconde lampe, et
- un conducteur électrique (38) raccordant l'entrée de tension à la première sortie pour alimenter en série les première et seconde lampes.

## Description

La présente invention concerne un dispositif de signalisation ou d'éclairage d'un véhicule et une carte de pilotage d'alimentation pour ce dispositif.

Il existe des dispositifs de signalisation ou d'éclairage d'un véhicule automobile équipé d'une caisse comportant :
- une première lampe montée à l'intérieur d'un premier feu de signalisation ou d'éclairage fixé à l'extérieur de la caisse du véhicule automobile,
- une seconde lampe montée à l'intérieur d'un second feu de signalisation ou d'éclairage fixé à l'extérieur de la caisse du véhicule automobile, et
- une carte commandable de pilotage de la tension d'alimentation des première et seconde lampes, cette carte étant montée à l'intérieur du premier ou du second feux de signalisation ou d'éclairage, et cette carte comportant une première sortie d'alimentation raccordée à la première lampe pour alimenter cette première lampe.

Dans ces dispositifs, la même carte de pilotage alimente une seule lampe. En effet, si deux lampes étaient raccordées en parallèle sur la première sortie d'alimentation de cette carte, l'appel de courant lors de la mise sous tension des lampes devient deux fois plus important, ce qui est inacceptable.

Par ailleurs, l'utilisation d'une résistance pour limiter l'importance de cet appel de courant lors de la mise sous tension de deux lampes raccordées en parallèle sur la première sortie est déconseillée. En effet, la quantité de puissance électrique à dissiper par la résistance est importante et conduit à un échauffement indésirable de l'environnement de cette résistance.

L'invention vise à proposer un dispositif de signalisation ou d'éclairage d'un véhicule automobile dans lequel l'appel de courant observé lors de la mise sous tension de la première et d'une seconde lampes est acceptable.

L'invention a donc pour objet un dispositif de signalisation ou d'éclairage dans lequel la carte de pilotage comporte :
- une seconde sortie d'alimentation raccordée à la seconde lampe pour délivrer à la seconde lampe une première tension d'alimentation pilotée,
- une entrée de tension raccordée à la seconde lampe, et
- un conducteur électrique raccordant l'entrée de tension à la première sortie pour alimenter en série les première et seconde lampes.

Grâce aux caractéristiques ci-dessus de la carte de pilotage, la première et la seconde lampes sont alimentées en série, ce qui limite l'appel de courant lors de la mise sous tension de ces lampes. De plus, la mise en série des lampes permet d'éviter d'avoir recours à une résistance de limitation de courant dissipant une quantité importante de puissance électrique.

L'invention a également pour objet une carte de pilotage adaptée pour être utilisée dans le dispositif de signalisation ou d'éclairage ci-dessus.

Les modes de réalisation de cette carte de pilotage peuvent comporter une ou plusieurs des caractéristiques suivantes :
- un premier dissipateur commandable de puissance électrique apte à dissiper au moins la même puissance électrique que la puissance dissipée par la première lampe lorsque les première et seconde lampes sont alimentées en série avec la première tension pilotée, ce dissipateur étant raccordable entre le conducteur électrique et un potentiel de référence en réponse à une commande de substitution de la première lampe ;
- la carte est apte à délivrer par l'intermédiaire de la même première sortie une seconde tension plus élevée que la tension aux bornes de la première lampe lorsque la première et la seconde lampes sont alimentées en série, et systématiquement en même temps, à générer une commande de substitution de la première lampe ;
- la carte comporte un second dissipateur commandable de puissance électrique apte à dissiper au moins la même puissance électrique que la puissance dissipée par la seconde lampe lorsque les première et seconde lampes sont alimentées en série avec la première tension pilotée, ce dissipateur étant raccordable en série avec la première lampe en réponse à une commande de substitution de la seconde lampe ;
- le premier et/ou le second dissipateurs est un transistor commandable pour fonctionner en tant que résistance dissipatrice de puissance électrique en réponse à la commande de substitution ;
- la carte comporte un limiteur d'appel de courant raccordé en série avec la première ou la seconde lampe ;
- le limiteur de courant présente au moins un premier point de fonctionnement lors de la mise sous tension de la première ou de la seconde lampe permettant au maximum le passage d'une première intensité de courant, et un second point de fonctionnement en régime permanent permettant le passage au maximum d'une seconde intensité de courant inférieure à la première intensité.

Les modes de réalisation de cette carte de pilotage présentent en outre les avantages suivants :
- l'utilisation d'un dissipateur de puissance électrique permet, si l'une de la première ou de la seconde lampe est indisponible pour son usage en tant que limiteur d'appel de courant lors de l'alimentation de la première ou de la seconde lampes avec la première tension pilotée, de limiter l'appel de courant ;
- la génération systématique d'une commande de substitution de la première lampe, lorsque cette première lampe est alimentée avec la tension de feu de stop, permet de limiter l'appel de courant lié à la mise sous tension simultanée de la seconde lampe ;
- l'utilisation d'un transistor commandable en tant que dissipateur de puissance électrique est plus simple et moins coûteux que l'utilisation d'une résistance raccordée en série avec un transistor ;
- l'utilisation de limiteurs de courant permet d'allonger la durée de vie des lampes ;
- l'utilisation d'un limiteur de courant présentant deux points de fonctionnement différents permet d'obtenir une limitation de l'intensité du courant plus efficace lors du régime permanent que lors de la mise sous tension et donc plus adaptée au fonctionnement des lampes.

L'invention sera mieux comprise à la lecture de la description qui va suivre, donnée uniquement à titre d'exemple et faite en se référant aux dessins sur lesquels :
- la figure 1 est un schéma électronique simplifié d'un dispositif de signalisation ou d'éclairage d'un véhicule automobile ;
- la figure 2 est un graphe représentant les courbes caractéristiques d'un transistor MOSFET utilisé dans le dispositif de la figure 1 ; et
- la figure 3 est un autre mode de réalisation d'un dispositif de signalisation ou d'éclairage d'un véhicule automobile.

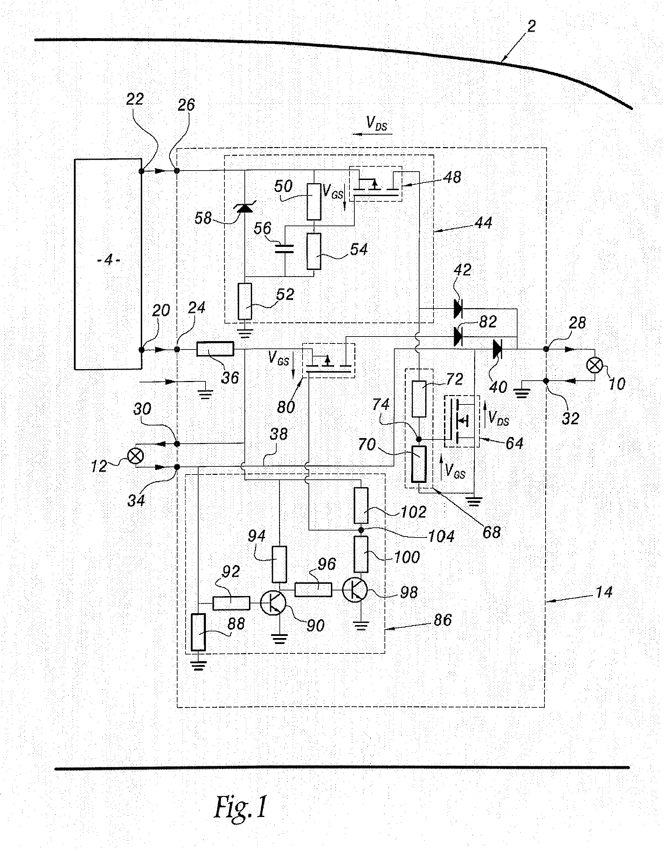

La figure 1 représente un véhicule automobile 2 dont seul le contour de la caisse a été représenté. Ce véhicule est équipé d'une porte de coffre arrière et de plusieurs dispositifs de signalisation ou d'éclairage. Chaque dispositif de signalisation ou d'éclairage comporte un calculateur central 4, deux lampes, et une carte de pilotage de l'alimentation de ces lampes. Le calculateur central 4 est, par exemple, commun à l'ensemble des cartes de pilotage du véhicule 2.

Ici, pour simplifier l'illustration de la figure 1, seul un dispositif de signalisation a été représenté.

Ce dispositif de signalisation comporte :
- une lampe 10 montée à l'intérieur d'un feu de signalisation arrière droit fixé à l'extérieur de la caisse du véhicule 2,
- une lampe 12 montée à l'intérieur d'un second feu de signalisation arrière droit fixé à l'extérieur de la caisse du véhicule 2, et
- une carte commandable 14 de pilotage de la tension d'alimentation des lampes 10 et 12.

Plus précisément, le feu de signalisation contenant la lampe 10 est fixé à la caisse du véhicule 2 tandis que le feu de signalisation contenant la lampe 12 est fixé sur la porte de coffre arrière de ce véhicule 2.

Les lampes 10 et 12 sont des lampes mono-filament remplissant la fonction de feu de position lorsqu'elles sont alimentées avec une tension Vp de feu de position. De plus, la lampe 10 remplit la fonction de feu de stop lorsqu'elle est alimentée avec une tension Vₛ de feu de stop strictement supérieure à la tension Vp.

Le calculateur 4 est apte à commander la carte 14 pour allumer ou éteindre les lampes 10 et 12 en fonction de commandes transmises par le conducteur. A cet effet, le calculateur 4 est équipé d'une borne 20 de commande de l'activation des feux de position et d'une borne 22 de commande de l'activation des feux de stop. Lorsque l'activation des feux de position ou des feux de stop est commandée, les bornes 20 et 22 délivrent chacune une tension V_{c} d'alimentation, la tension V_{c} est ici égale à la tension Vₛ.

La carte 14 est équipée de deux bornes 24 et 26 d'entrée de tension raccordées respectivement aux bornes 20 et 22. La carte 14 est apte à piloter l'alimentation des lampes 10 et 12 en fonction de la tension V_{c} transmise par le calculateur 4 sur ces bornes 24 et/ou 26.

La carte 14 comprend également :
- deux sorties d'alimentation 28 et 30 raccordées chacune à un pôle respectivement des lampes 10 et 12, et
- deux entrées 32 et 34 raccordées respectivement à un autre pôle des lampes 10 et 12.

La sortie 30 est raccordée à la borne 24 par l'intermédiaire d'une résistance 36 de chute de tension. La valeur de la résistance 36 est choisie pour que la tension aux bornes des lampes 10 et 12 corresponde à la tension préconisée de fonctionnement pour ces lampes.

L'entrée 34 est raccordée par l'intermédiaire d'un conducteur électrique 38 à la sortie 28 pour alimenter en série les lampes 10 et 12 chacune avec la tension Vp. Une diode 40 dont la cathode est dirigée vers la sortie 28 est montée sur le conducteur 38.

L'entrée 32 est raccordée à un potentiel de référence tel que, par exemple, la masse du véhicule 2.

La sortie 28 est également raccordée par l'intermédiaire successivement d'une diode 42 et d'un limiteur 44 d'appel de courant à la borne 26. La cathode de la diode 42 est dirigée vers la sortie 28.

Le limiteur 44 est réalisé à l'aide d'un transistor MOSFET 48 à canal P dont la source est raccordée à la borne 26 et le drain est raccordé à l'anode de la diode 42. Une résistance 50 est raccordée entre la source et la grille du transistor 48.

La grille du transistor 48 est également raccordée au potentiel de référence par l'intermédiaire successivement d'un circuit RC parallèle et d'une résistance 52. Le circuit RC parallèle est formé d'une résistance 54 en parallèle aux bornes d'un condensateur 56.

Une diode ZENER 58 est raccordée entre la borne 26 et l'extrémité de la résistance 52 opposée au potentiel de référence. La cathode de la diode 58 est dirigée vers la borne 26.

De manière à pouvoir palier à l'indisponibilité de la lampe 10, la carte 14 comprend un dissipateur de puissance électrique 64 raccordé d'un côté au conducteur 38 et de l'autre côté au potentiel de référence. Dans ce mode de réalisation, le dissipateur 64 est un transistor MOSFET à canal N dont le drain est raccordé à l'anode de la diode 40 et dont la source est raccordée au potentiel de référence. Un générateur automatique 68 de commande de substitution est utilisé pour commander le dissipateur 64. Ce générateur 68 est également apte, ici, à régler la puissance électrique dissipée par le dissipateur 64. A cet effet, le générateur 68 est ici un pont diviseur de tension formé de deux résistances 70 et 72 raccordées en série par l'intermédiaire d'un point milieu 74. Le point milieu 74 est raccordé à la grille du transistor 64. L'extrémité de la résistance 72 opposée au point milieu 74 est raccordée à la sortie du limiteur d'appel de courant 44 et à l'anode de la diode 42. L'extrémité de la résistance 70 opposée au point milieu 74 est raccordée au potentiel de référence. La valeur des résistances 70 et 72 est choisie pour que la puissance électrique dissipée par le transistor 64 lorsque celui-ci est passant, soit égale à la puissance électrique dissipée par la lampe 10 lorsque les lampes 10 et 12 sont alimentées en série chacune avec la tension Vp.

La carte 10 est également équipée d'un dissipateur 80 de puissance électrique propre à se substituer à la lampe 12 en cas de défaillance ou d'absence de cette lampe 12. Ce dissipateur 80 est, par exemple, un transistor MOSFET à canal P dont la source est raccordée à la borne 24 par l'intermédiaire de la résistance 36 et dont le drain est raccordé à la sortie 28 par l'intermédiaire d'une diode 82. La cathode de la diode 82 est dirigée vers la sortie 28.

Pour commander la fermeture du transistor 80, la carte 14 comprend un générateur automatique 86 de commande de substitution de la lampe 12. Ce générateur 86 est apte à déclencher automatiquement la fermeture du transistor 80 lorsque la lampe 12 est défaillante ou absente et à régler la puissance électrique dissipée par le transistor 80.

Le générateur 86 comprend une résistance 88 directement raccordée entre l'entrée 34 et le potentiel de référence.

Le générateur 86 comprend un transistor bipolaire 90 dont la base est raccordée par l'intermédiaire d'une résistance 92 à l'entrée 34. L'émetteur du transistor 90 est raccordé au potentiel de référence et son collecteur est raccordé à la sortie 30 par l'intermédiaire d'une résistance 94.

Le collecteur du transistor 90 est également raccordé par l'intermédiaire d'une résistance 96 à la base d'un transistor 98. L'émetteur du transistor 98 est raccordé au potentiel de référence et son collecteur est raccordé à la sortie 30 par l'intermédiaire de deux résistances 100 et 102 raccordées en série par le moyen d'un point milieu 104. Le point milieu 104 est raccordé à la grille du transistor 80. La valeur des résistances 100 et 102 est choisie pour que la puissance électrique dissipée par le transistor 80 lorsqu'il est passant, soit égale à la puissance électrique dissipée par la lampe 12 lorsque les lampes 10 et 12 sont alimentées en série chacune avec la tension Vp.

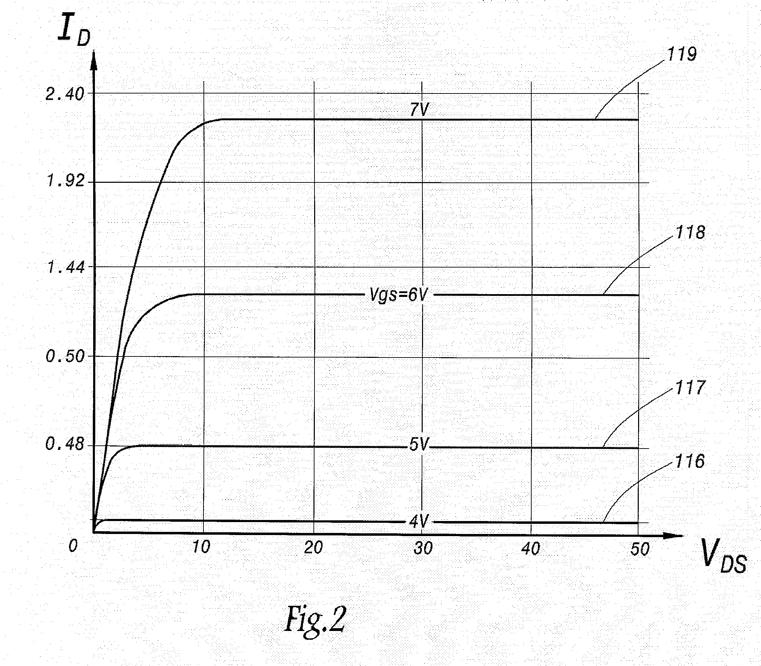

La figure 2 représente un graphe montrant l'évolution de l'intensité du courant I_{D} traversant le transistor 48 en fonction de la tension drain-source V_{DS} de ce transistor pour différentes tensions grille-source V_{GS} possibles. Plus précisément, ce graphe comporte quatre courbes 116 à 119 correspondant respectivement à une tension V_{GS} de 4 V, 5 V, 6 V et 7 V. Comme l'illustre ce graphe, fixer la tension V_{GS} permet de limiter le courant I_{D} qui peut traverser ce transistor.

Le fonctionnement du dispositif de signalisation de la figure 1 va maintenant être décrit dans quatre cas de fonctionnement possibles.

### Cas 1 : feu de position actif, feu de stop inactif et aucun défaut

Dans ce premier cas, on suppose que les lampes 10 et 12 fonctionnent et que le conducteur souhaite activer uniquement les feux de position. Dans ces conditions, le calculateur 4 délivre par l'intermédiaire de la borne 20 une tension V_{c} et délivre aucune tension par l'intermédiaire de la borne 22. Un courant circule alors au travers de la résistance 36, de la lampe 12, du conducteur 38, de la diode 40 et de la lampe 10. Ainsi, les lampes 10 et 12 sont alimentées en série de sorte que lors de la mise sous tension, l'appel de courant est plus petit que celui qui serait observé si ces lampes 10 et 12 étaient alimentées à partir de la même tension mais en parallèle. La tension Vp correspond à la tension délivrée entre la sortie 30 et l'entrée 34 et entre la sortie 28 et l'entrée 32.

Dans ces conditions de fonctionnement, le transistor 90 est passant puisqu'une tension est présente sur sa base par l'intermédiaire des résistances 92 et 88. La base du transistor 98 est raccordée au potentiel de référence par l'intermédiaire de la résistance 96 et du transistor 90. Le transistor 98 est donc non passant. Puisque le transistor 98 est non passant, la tension V_{GS} entre la source et la grille du transistor 80 est nulle de sorte que ce transistor 80 est non passant.

La diode 42 empêche un retour de courant vers la borne 26 à partir du conducteur 38.

### Cas 2 : feu de position activé, feu de stop désactivé et lampe 12 absente ou défaillante

Le cas 2 diffère du cas 1 par le fait que la lampe 12 est considérée comme défaillante ou absente, de sorte qu'elle se comporte comme un interrupteur non passant. Dans ces conditions, aucune tension n'est présente sur la base du transistor 90, de sorte que ce transistor est non passant. Contrairement au cas 1, le transistor 98 est donc passant puisque sa base est sous tension par l'intermédiaire des résistances 96 et 94. La résistance 100 est raccordée au potentiel de référence par l'intermédiaire du transistor 98 et provoque une chute de tension au niveau du point milieu 104. La tension V_{GS} du transistor 80 n'est donc pas nulle, de sorte que ce transistor 80 est passant et se comporte sensiblement comme une résistance pure dissipant de la puissance électrique.

On comprend donc que dans ce cas, le courant circule au travers de la résistance 36 du transistor 80, de la diode 82 et de la lampe 10. L'appel de courant lors de la mise sous tension n'est pas plus élevé que celui décrit dans le cas 1, puisque le transistor 80 dissipe autant de puissance électrique que la lampe 12. On évite donc un appel de courant important même si la lampe 12 est absente ou défaillante.

### Cas 3 : feu de position inactif, feu de stop actif et aucun défaut

Dans ce cas, le calculateur 4 commande uniquement l'activation du feu de stop. Pour cela, le calculateur 4 délivre par l'intermédiaire de la borne 22 la tension V_{c} sur la borne 26 et aucune tension n'est délivrée sur la borne 24. La lampe 10 est donc alimentée par l'intermédiaire de la diode 42 et du limiteur 44.

Le fonctionnement du limiteur 44 va maintenant être décrit.

Lors de la mise sous tension, le condensateur 56 est complètement déchargé de sorte que la tension aux bornes de la résistance 54 est nulle. Cet état correspond à un premier point de fonctionnement du limiteur 44 dans lequel la tension V_{GS} entre la source et la grille du transistor 48 est imposée par la diode ZENER 58. A titre d'exemple, dans cette situation, la tension imposée est de 7 V, ce qui correspond d'après le graphe de la figure 2 à une intensité maximale de 2,2 ampères.

Ensuite, le condensateur 56 se charge progressivement pour atteindre un second point de fonctionnement. Lorsque le second point de fonctionnement est atteint, la tension V_{GS} est égale à la tension imposée par la diode ZENER 58 moins la tension aux bornes de la résistance 54. Par exemple, la résistance 54 est choisie pour que lorsque le second point de fonctionnement est atteint la tension V_{GS} soit égale à 4 volts, ce qui correspond à une intensité maximale de 0,48 ampères, ce qui est suffisant pour alimenter la lampe 10 lorsque le régime permanent est atteint.

Ainsi, le limiteur 44 autorise une intensité de courant élevé lors de la mise sous tension, ce qui accélère et facilite l'allumage de la lampe 10 et dans un second temps n'autorise qu'une intensité maximale plus réduite lorsque la lampe 10 est allumée et qu'elle ne provoque plus d'appel de courant important.

### Cas 4 : feu de position actif, feu de stop actif et aucun défaut

Lorsque le conducteur allume simultanément les feux de position et les feux de stop, le calculateur 4 délivre simultanément la tension V_{C} sur les bornes 26 et 24. Dans ces conditions, l'alimentation de la lampe 10 est réalisée de façon identique à ce qui a été décrit pour le cas 3.

De plus, une tension est présente sur le point milieu 74, ce qui provoque la fermeture du transistor 64.

Pour alimenter la lampe 12, un courant circule au travers de la résistance 36, de cette lampe 12, du conducteur 38 et traverse le transistor 64 qui est passant. Dans cet état, le transistor 64 dissipe une puissance électrique égale à la puissance électrique que dissipe la lampe 10 dans le cas 1. En quelque sorte, le transistor 64 se substitue à la lampe 10 puisque celle-ci n'est pas disponible pour remplir sa fonction de limitation d'appel de courant lorsqu'elle est utilisée en feu de stop.

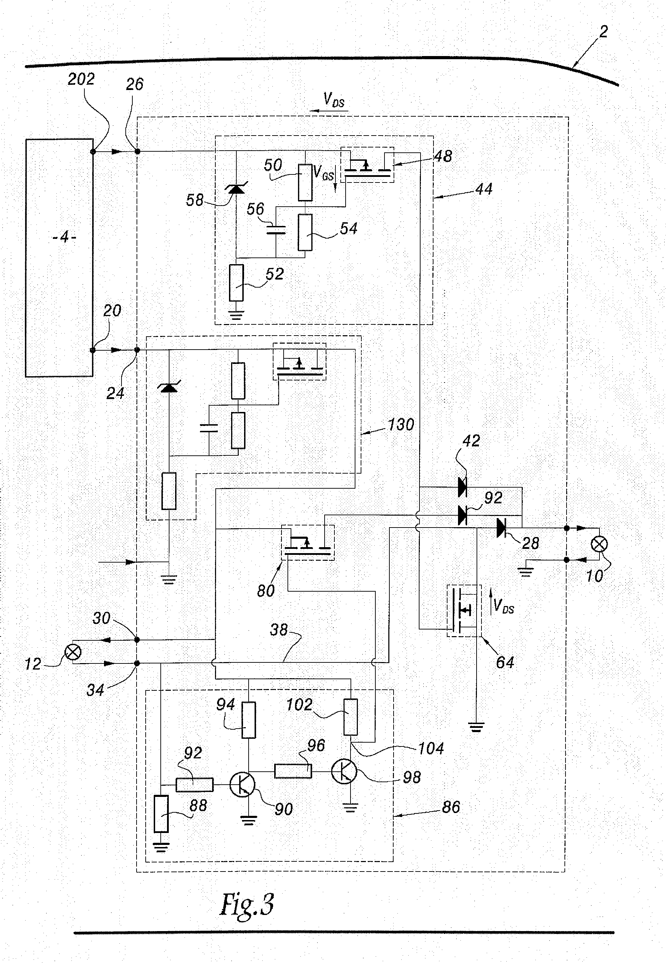

La figure 3 représente un autre mode de réalisation d'un dispositif de signalisation qui ne diffère du dispositif de la figure 1 que par les points suivants :
- la résistance 36 du dispositif de la figure 1 est remplacée par un limiteur 130 d'appel de courant, et
- les résistances 70 et 72 sont supprimées.

Les autres éléments de ce dispositif sont identiques à ceux décrits en regard de la figure 1 et portent donc les mêmes références numériques.

Le limiteur 130 est identique au limiteur 44 et ne sera donc pas décrit en détail.

Le fonctionnement du dispositif de la figure 3 se déduit de celui de la figure 1. On notera cependant qu'ici la limitation du courant d'appel lors de l'activation des feux de position est également assurée par le limiteur 130. Du fait que le limiteur 130 assure qu'une certaine intensité maximale ne sera pas dépassée lorsque les feux de position sont mis sous tension, il n'est plus nécessaire que ce dispositif soit équipé de résistances telles que les résistances 70 et 72 pour régler la quantité de puissance électrique dissipée par le transistor 64, lorsque celui-ci est passant. Dés lors, ces résistances ont été supprimées dans ce mode de réalisation.

De nombreux autres modes de réalisation sont possibles. Par exemple, dans le mode de réalisation de la figure 1, la résistance 36 peut être supprimée.

Ici, les dissipateurs de puissance électrique ont été décrits comme étant réalisés à partir d'un transistor MOSFET. Toutefois, en variante, ce transistor MOSFET est remplacé par une résistance raccordée en série avec un transistor bipolaire (ou un relais réalisant la même fonction), la valeur de la résistance étant choisie pour dissiper la même quantité de puissance électrique que le transistor MOSFET qu'elle remplace.

La carte de pilotage peut être montée à l'intérieur du feu fixé à l'extérieur de la porte de coffre.

Dans un mode de réalisation simplifié, le dissipateur 64 et/ou le dissipateur 80 sont supprimés ainsi que les générateurs de commandes qui leur sont associés. Il est également possible de supprimer les limiteurs de courant 44 et/ou 130.

Ici, les lampes ont été décrites comme étant des lampes mono-filament. Toutefois, en variante, par lampe on désigne tout moyen d'émission de lumière.

Le dispositif de signalisation a été décrit dans le cas particulier des feux de position et des feux stop. Toutefois, le dispositif peut également être appliqué pour piloter l'alimentation des phares avant du véhicule.

## Revendications

1. Dispositif de signalisation ou d'éclairage d'un véhicule automobile équipé d'une caisse, ce dispositif comportant :
- une première lampe (10) montée à l'intérieur d'un premier feu de signalisation ou d'éclairage fixé à l'extérieur de la caisse du véhicule automobile,
- une seconde lampe (12) montée à l'intérieur d'un second feu de signalisation ou d'éclairage fixé à l'extérieur de la caisse du véhicule automobile, et
- une carte commandable (14) de pilotage de la tension d'alimentation des première et seconde lampes, cette carte étant montée à l'intérieur du premier ou du second feux de signalisation ou d'éclairage, et cette carte comportant une première sortie (28) d'alimentation raccordée à la première lampe pour alimenter cette première lampe,
**caractérisé en ce que** la carte de pilotage comporte également :
- une seconde sortie (30) d'alimentation raccordée à la seconde lampe pour délivrer à la seconde lampe une première tension d'alimentation pilotée,
- une entrée (34) de tension raccordée à la seconde lampe, et
- un conducteur électrique (38) raccordant l'entrée de tension à la première sortie pour alimenter en série les première et seconde lampes.

2. Carte commandable de pilotage de la tension d'alimentation d'une première et d'une seconde lampes apte à être mise en oeuvre dans un dispositif de signalisation ou d'éclairage conforme à la revendication 1, cette carte comportant :
- une première sortie (28) d'alimentation apte à être raccordée à la première lampe pour alimenter cette première lampe,
**caractérisée en ce que** cette carte comporte .
- une seconde sortie (30) d'alimentation apte à être raccordée à la seconde lampe pour délivrer à la seconde lampe une première tension d'alimentation pilotée,
- une entrée (34) de tension apte à être raccordée à la seconde lampe,
- un conducteur électrique (38) raccordant l'entrée de tension à la première sortie pour alimenter en série les première et seconde lampes.

3. Carte selon la revendication 2, **caractérisée en ce que** la carte comporte un premier dissipateur commandable (64) de puissance électrique apte à dissiper au moins la même puissance électrique que la puissance dissipée par la première lampe lorsque les première et seconde lampes sont alimentées en série avec la première tension pilotée, ce dissipateur étant raccordable entre le conducteur électrique et un potentiel de référence en réponse à une commande de substitution de la première lampe.

4. Carte selon la revendication 3, **caractérisée en ce que** la carte est apte à délivrer par l'intermédiaire de la même première sortie une seconde tension plus élevée que la tension aux bornes de la première lampe lorsque la première et la seconde lampes sont alimentées en série, et systématiquement en même temps, à générer une commande de substitution de la première lampe.

5. Carte selon l'une quelconque des revendications 2 à 3, **caractérisée en ce que** la carte comporte un second dissipateur commandable (80) de puissance électrique apte à dissiper au moins la même puissance électrique que la puissance dissipée par la seconde lampe lorsque les première et seconde lampes sont alimentées en série avec la première tension pilotée, ce dissipateur étant raccordable en série avec la première lampe en réponse à une commande de substitution de la seconde lampe.

6. Carte selon la revendication 3 ou 5, **caractérisée en ce que** le premier et/ou le second dissipateurs (64, 80) est un transistor commandable pour fonctionner en tant que résistance dissipatrice de puissance électrique en réponse à la commande de substitution.

7. Carte selon l'une quelconque des revendications 2 à 6, **caractérisée en ce que** la carte comporte un limiteur (44 ; 130) d'appel de courant raccordé en série avec la première ou la seconde lampe.

8. Carte selon la revendication 7, **caractérisée en ce que** le limiteur (44 ; 130) de courant présente au moins un premier point de fonctionnement lors de la mise sous tension de la première ou de la seconde lampe permettant au maximum le passage d'une première intensité de courant, et un second point de fonctionnement en régime permanent permettant le passage au maximum d'une seconde intensité de courant inférieure à la première intensité.
